# EUROPEAN PATENT APPLICATION

(11) **EP 4 020 433 A1**
(43) Date of publication of application: **29.06.2022**
(21) Application number: 20306691.5
(22) Date of filing: 23.12.2020
(51) Int. Cl.: G09C 1/00, H04L 9/08, H04L 9/32

(54) **METHOD, CHIP, AND SYSTEM FOR MANAGING A PHYSICALLY UNCLONABLE FUNCTION CHIP PUBLIC KEY**

(71) Applicant: Thales DIS France SA, 92190 Meudon (FR)
(72) Inventor: TEGLIA, Yannick, 13881 Gémenos Cedex (FR); BERZATI, Alexandre, 13881 Gémenos Cedex (FR)
(74) Representative: Grevin, Emmanuel

(57) **Abstract**

A chip 14 includes at least one PUF type element 142 and at least one hardcoded key 144, the method 20 comprises:
- a) receiving 22, by the chip, from an entity 12, a request for getting a signed PUF chip public key certificate;
- b) generating 24, as a PUF chip private key, based on the request, a private key relating to the at least one PUF element, and determining 26, as a PUF chip public key, a public key relating to the at least one PUF element;
- c) generating 28, as a PUF chip public key certificate, a certificate relating to the PUF chip public key;
- d) signing 210 the PUF chip public key certificate using the hardcoded key; and
e) sending 212, from the chip to the entity, as a request response, a signed PUF chip public key certificate.

## Description

### Field of the invention:

The invention relates generally to a method for managing a Physically Unclonable Function (or PUF) chip public key.

Furthermore, the invention pertains to a system for managing a PUF chip public key. The system includes an entity and a chip.

The invention relates to a chip for managing a PUF chip public key as well.

### State of the art:

US 9 621 359 B2 describes a system with a chip including a PUF element that generates a random number. A system processor computes, if the random number is non-null, based on the random number, a private key. The system processor computes a public key associated with the random number. Then, the system processor receives a public key certificate based on the public key. The public key certificate is then signed with a private key that is external to the chip.

However, such a prior art solution implies that the private key is securely stored outside of the chip and the signed public key certificate is stored in a non-volatile memory in the system. Moreover, the prior art solution needs a secure channel to protect data exchanged between the chip and the entity of the system.

There is a need of a solution that allows avoiding a storage of any private key in a secure storage, a storage of any signed public key certificate and a use of a secure channel.

### Summary of the invention:

The invention proposes a solution for satisfying the just herein above specified need by providing a method for managing a PUF chip public key.

According to the invention, the chip including at least one PUF type element and at least one hardcoded key, the method comprises:
- a) receiving, by the chip, from an entity, a request for getting a signed PUF chip public key certificate;
- b) generating, as a PUF chip private key, based on the request, a private key relating to the at least one PUF element, and determining, as a PUF chip public key, a public key relating to the at least one PUF element;
- c) generating, as a PUF chip public key certificate, a certificate relating to the PUF chip public key;
- d) signing the PUF chip public key certificate using the hardcoded key; and
- e) sending, from the chip to the entity, as a request response, a signed PUF chip public key certificate.

The principle of the invention consists in using a chip with one or several PUF type elements and one or several hardcoded keys. The chip gets, from an entity, such as e.g., a server, a request for a signed certificate relating to a PUF (chip) public key. The chip generates, based on the request, a PUF private key and determines a corresponding PUF public key. Then, the chip generates a corresponding certificate relating to the PUF public key and signs, using the hardcoded key, the PUF public key certificate. The chip sends back to the entity a (resulting) signed PUF public key certificate.

It is to be noted that there is no need that the PUF generates a PUF private key and a corresponding PUF public key. The PUF may generate one of the PUF private key and the PUF public key and compute the other one of the PUF private key and the PUF public key.

The use of a hardcoded key that is embedded (or incorporated) within the hardware of the chip allows signing a corresponding PUF public key certificate.

The invention solution does not need any secure storage for any private key.

The invention solution allows transmitting a signed PUF public key certificate from a chip to an entity.

The invention solution does not need using any secure channel for issuing the signed PUF public key certificate since the signed PUF public key certificate does not include any secret data.

The invention solution allows issuing, on demand, i.e. based on an entity request, a signed PUF public key certificate.

The invention solution is simple and therefore cheap to implement.

The invention solution is secure since it is difficult, if not impossible, to duplicate the chip.

The invention solution allows facilitating access to data inside the chip for a dump/analysis.

The invention solution does not need any prior enrolment.

The invention solution does not need any server that is an intermediary between the chip and the entity.

The invention solution does not need any storage of the signed PUF public key certificate.

The invention solution does not need a secure entity to store the issued signed PUF public key certificate.

The invention solution does not need any secure environment at all since none of stored data, if any, is sensitive.

Contrary to the abovementioned prior art solution, the invention solution does not need using a secure storage for any private key.

Contrary to the abovementioned prior art solution, the invention solution allows avoiding the use of a secure channel since the issued signed PUF public key certificate is not sensitive.

Contrary to the abovementioned prior art solution, the invention solution allows avoiding using a secure system that stores the issued signed PUF public key certificate.

According to an additional aspect, the invention is a system for managing a PUF chip public key.

According to the invention, the system comprises an entity and a chip. The chip includes at least one PUF type element and at least one hardcoded key. The entity is configured to send, to the chip, a request for getting a signed PUF chip public key certificate. And the chip is configured to:
- generate, as a PUF chip private key, based on the request, a private key relating to the at least one PUF element, and determine, as a PUF chip public key, a public key relating to the at least one PUF element;
- generate, as a PUF chip public key certificate, a certificate relating to the PUF chip public key;
- sign the PUF chip public key certificate using the hardcoded key; and
- send, to the entity, as a request response, a signed PUF chip public key certificate.

The entity may include a local chip host device and/or a (remote) server with or without a memory used for storing the issued signed PUF chip public key certificate.

The server may include or not a Hardware Security Module (or HSM), as a (server) cooperating entity.

Within the present description, an HSM is a (physical) computing device, as a tamper resistant component(s), that protects access to stored and/or processed data, and that is(are) intended to communicate data with an external device(s), like e.g., a server.

According to a further additional aspect, the invention is a chip for managing a PUF chip public key.

According to the invention, the chip including at least one PUF type element and at least one hardcoded key, the chip is configured to:
- receive, from an entity, a request for getting a signed PUF chip public key certificate;
- generate, as a PUF chip private key, based on the request, a private key relating to the at least one PUF element, and determine, as a PUF chip public key, a public key relating to the at least one PUF element;
- generate, as a PUF chip public key certificate, a certificate relating to the PUF chip public key; and
- sign the PUF chip public key certificate using the hardcoded key..

The chip may be or not incorporated within a Secure Element (or SE).

Within the present description, an SE is a smart object that includes a chip(s) that protect(s), as a tamper resistant component(s), access to stored and/or processed data, and that is(are) intended to communicate data with an external device(s), like e.g., an SE host device.

The SE may include a chip, like e.g., a Secure Enclave, incorporated in a device, or a chip that is communicatively coupled to the device, as an SE host device, and included in a smart card (or another medium). The SE may be fixed to or removable from its host device. As removable SE, the SE may include a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device.

### Brief description of the drawings:

Additional features and advantages of the invention will be apparent from a detailed description of a preferred embodiment of the invention, given as an indicative and non-limitative example, in conjunction with the following drawings:

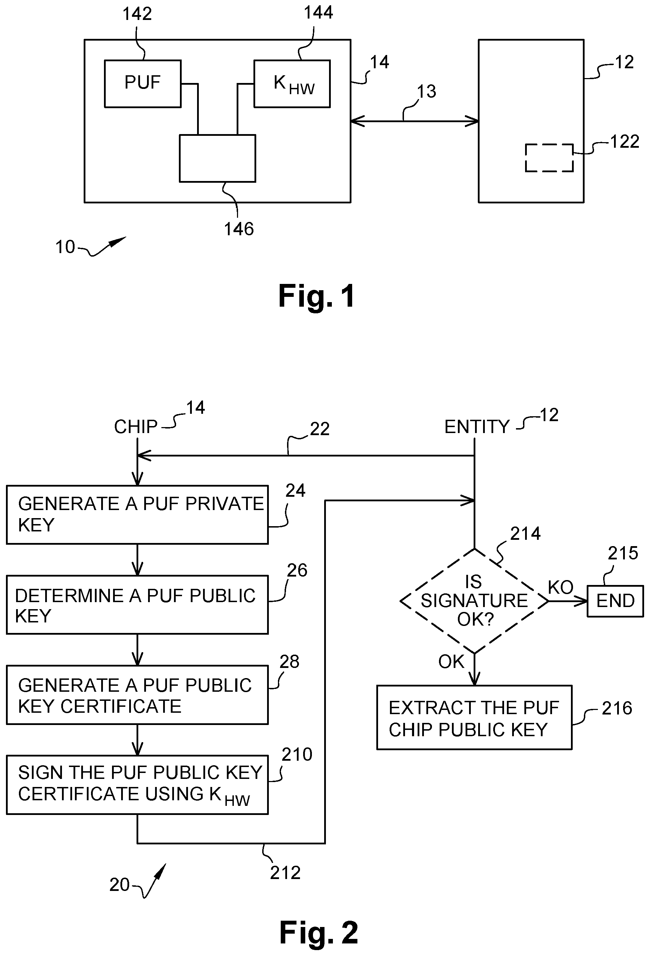

- Figure 1 is notably a simplified diagram of an embodiment of a system with a server, as an entity, and a chip, the chip including a PUF element and a hardcode private key, the server being configured to send, to the chip, a request, the chip being adapted to generate, based on the request, a PUF private key, determine, a corresponding PUF public key, generate and sign a PUF chip public key certificate using the hardcoded key and send back a signed PUF chip public key certificate, according to the invention; and
- Figure 2 is a message flow between the server and the chip of figure 1, so that the chip sends, based on the server request for getting a signed PUF chip public key certificate, a signed PUF chip public key certificate, as a request response, according to a particular invention embodiment.

### Detailed description:

Herein under is considered a case in which the invention method for managing a Physically Unclonable Function (or PUF) chip public key is implemented by a server, as an entity, and a chip. Neither the server needs to be an HSM nor the chip needs to be a SE, so as to perform the operations that are described infra and that are carried out by the server and the chip.

The invention does not impose any constraint as to a kind of the chip type.

Naturally, the herein below described embodiment is only for exemplifying purposes and is not considered to reduce the scope of the invention.

**Figure 1** shows schematically a system 10 for managing a PUF chip public key.

The system 10 includes a ServeR (or SR) 12, as an entity, and a chip 14.

The SR 12 is hosted by a computer device(s) including, each, data processing means, like e.g., a controller(s), a Central Processing Unit (or CPU) and/or a processor(s) (not represented), and one or several Input/Output (or I/O) interfaces for exchanging data with outside.

The SR 12 may include (or be connected to) an SR memory(ies) 122, as data storing means.

The SR 12 is accessible directly, i.e. without any intermediary entity, such as a server, from the chip 14 side.

The SR 12 is adapted to send, to a chip, a request for getting a signed PUF chip public key certificate.

The request may include data.

The SR 12 is configured to receive, as a request response, from the chip, a signed PUF chip public key certificate.

The chip 14 is connected, through a bi-directional link 13, to the SR 12.

The chip 14 includes, as a computing device, one or several (hardware) (micro)processors, one or several (micro)controllers and/or a CPU, as data processing means, and including or being connected to I/O interfaces that are internally all connected, through an internal bidirectional data bus.

The chip 14 may include and/or be connected to one or several memories, as data storing means.

The chip I/O interfaces may include a wired and/or a contactless interface(s), to exchange, over a ContacT (or CT) and/or ContacT-Less (or CTL) type link(s) 13, with the SR 12.

Within the present description, the adjective "CTL" denotes notably that an involved communication means communicates using one or several Short Range (or SR) type RadioFrequency (or RF) links.

The SR RF may be fixed at about 13,56 Mhz.

The chip I/O interfaces may include a wireless interface(s), to exchange, over a Long Range (or LR) type RF link(s) 13, through one or several communication networks (not represented), with the SR 12.

The LR RF may be fixed at several hundreds or thousands of MHz, like e.g., around 850, 900, 1800, 1900 and/or 2100 MHz.

The chip 14 includes one (or several) PUF type element(s) 142.

The chip 14 includes one (or several) HardWare (or HW) element(s) that embed(s) (or incorporate(s) physically a hardware encoded private key, as a hardcoded key, denoted Khw 144.

The hardcoded key may be specific to the chip 14.

The hardcoded key may be specific to a set of chips including the chip 14.

The hardcoded key may include either a hardcoded private key or a symmetric hardcoded key, as a secret key, that is shared by the chip 14 and the SR 12.

The HW element(s) may include one or several dedicated HW elements to provide the Khw 144.

The Khw 144 is fixed, i.e. stable (does not change) with the time.

The HW element(s) include(s) one (or several) Register Transfer Level (or RTL) element(s).

The RTL element(s) include(s) one or several fuses and/or one or several tie cells.

To access the Khw, the chip 14 (and more exactly its processor) reads, from the HW element(s), such as e.g., the RTL element(s), the Khw.

The chip 14 (and more exactly its processor) is arranged to receive, from an entity, a request for getting a signed PUF chip public key certificate.

The request may include data.

The chip 14 (and more exactly its processor) is adapted to generate, based on the (received) request, a private key relating to the PUF type element(s), as a PUF chip private key.

It is to be noted that there is only an ephemeral time to generate the PUF chip private key inherent to the PUF technology.

According to an alternative embodiment, i.e. instead of generating the PUF chip private key, the chip 14 (and more exactly its processor) is adapted to generate, based on the (received) request, a public key relating to the PUF type element(s), as a PUF chip public key.

The chip 14 may be arranged to generate or derive the PUF private key using an IDentifier relating to an application.

The chip 14 (and more exactly its processor) is configured to determine a public key relating to the PUF type element(s), as a PUF chip public key.

According to the alternative embodiment, i.e. instead of determining the PUF chip public key, the chip 14 (and more exactly its processor) is adapted to generate a private key relating to the PUF type element(s), as a PUF chip private key.

To determine the PUF chip public key, the chip 14 (and more exactly its processor) may be adapted to generate the PUF chip public key using the PUF chip private key or the derived PUF chip private key and a predefined cryptographic algorithm.

The cryptographic algorithm may include a Rivest-Shamir-Adleman (or RSA) type algorithm or an Elliptic Curve Cryptographic (or ECC) type algorithm, as a public key algorithm.

Alternatively, i.e. instead of generating the PUF chip public key, the chip 14 is configured to retrieve the PUF chip public key. To retrieve the PUF chip public key, the chip 14 may get the PUF chip public key from an internal memory (not represented), such as a Non-Volatile Memory (or NVM) included in the chip.

The chip 14 (and more exactly its processor) is configured to generate a certificate relating to the PUF chip public key, as a PUF chip public key certificate.

The chip 14 (and more exactly its processor) is adapted to sign the PUF chip public key certificate using the Khw.

The (resulting) signed PUF chip public key certificate is preferably not stored in the chip 14.

The chip 14 is arranged to send, to the SR 12, as a request response, a (resulting) signed PUF chip public key certificate.

**Figure 2** shows a message flow 20 that involves the SR 12 and the chip 14, so as to manage a PUF chip public key.

It is assumed that the public key associated to the Khw is available and therefore accessible, i.e. stored at the SR 12 side.

The SR 12 sends 22 (not represented), to the SR 14, a request for getting a signed PUF chip public key certificate.

The request may include data.

Once the chip 14 has received the request, the chip 14 generates 24 a PUF private key.

The chip 14 determines 26 a PUF public key.

The chip 14 then generates 28 a corresponding PUF chip public key certificate. The PUF chip public key certificate includes the PUF public key.

The chip 14 signs 210 the PUF chip public key certificate using the Khw.

The chip 14 then sends 212, to the SR 12, as a request response, the signed PUF chip public key certificate.

Once the SR 12 has received the signed PUF chip public key certificate, the SR 12 may verify 214 the signature using a predetermined public key associated to the Khw.

If the signature is successfully verified, i.e. if the signature is valid, when applicable (i.e. if the SR 12 verifies the signature), the SR 12 extracts 216, from the PUF chip public key certificate, the PUF chip public key.

Optionally, the SR 12 may store the PUF chip public key certificate and/or the PUF chip public key.

Once the SR 12 has retrieved the PUF chip public key, the SR 12 may exchange securely with the chip 12 while using the PUF chip public key, as a key for encrypting data to be communicated to the chip 14.

Such a method may be implemented during a wafer personalization.

The invention solution allows issuing, on demand, i.e. based on an entity request, a signed PUF public key certificate.

The invention solution allows getting, at the entity side, a signed PUF public key certificate without using any secure channel while being secure.

The invention solution is simple and therefore cheap to implement.

The invention solution is secure.

## Claims

1. A method (20) for managing a Physically Unclonable Function, PUF, chip public key, the chip (14) including at least one PUF type element (142) and at least one hardcoded key (144), the method comprising:
- a) receiving (22), by the chip, from an entity (12), a request for getting a signed PUF chip public key certificate;
- b) generating (24), as a PUF chip private key, based on the request, a private key relating to the at least one PUF element, and determining (26), as a PUF chip public key, a public key relating to the at least one PUF element;
- c) generating (28), as a PUF chip public key certificate, a certificate relating to the PUF chip public key;
- d) signing (210) the PUF chip public key certificate using the hardcoded key; and
- e) sending (212), from the chip to the entity, as a request response, a signed PUF chip public key certificate.

2. Method according to claim 1, wherein, the hardcoded key being a hardcoded private key, the method further comprises verifying, by the entity, the signature using a predetermined public key relating to the hardcoded private key, and extracting, if the signature is successfully verified, from the PUF chip public key certificate, the PUF chip public key.

3. Method according to any previous claim, wherein the signed PUF chip public key certificate is not stored in the chip.

4. Method according to any previous claim, wherein to carry out the step e) of signing the PUF chip public key certificate based on the hardcoded key, the chip derives the PUF private key using an identifier relating to an application and the chip signs the PUF chip public key certificate using the derived PUF private key.

5. Method according to any previous claim, wherein the chip reads, from at least one Register Transfer Level, RTL, type element, the hardcoded key.

6. Method according to claim 5, wherein the at least one RTL type element includes at least one element of a group including:
- at least one fuse; and
- at least one tie cell.

7. Method according to any previous claim, wherein, to determine the PUF chip public key, the chip generates the PUF chip public key using the PUF chip private key and a cryptographic algorithm.

8. Method according to claim 7, wherein the cryptographic algorithm includes a Rivest-Shamir-Adleman, RSA, type algorithm.

9. Method according to any previous claim, wherein the cryptographic algorithm includes a Elliptic Curve Cryptography, ECC, type algorithm.

10. Method according to any previous claim, wherein the hardcoded key is specific to the chip.

11. Method according to any previous claim, wherein the hardcoded key is specific to a set of chips including the chip.

12. Method according to any previous claim, wherein the entity stores the PUF chip public key certificate.

13. A system for managing a Physically Unclonable Function, PUF, chip public key, the system comprising an entity and a chip, the chip including at least one PUF type element and at least one hardcoded key,
the entity is configured to send, to the chip, a request for getting a signed PUF chip public key certificate;
the chip is configured to:
- generate, as a PUF chip private key, based on the request, a private key relating to the at least one PUF element, and determine, as a PUF chip public key, a public key relating to the at least one PUF element;
- generate, as a PUF chip public key certificate, a certificate relating to the PUF chip public key;
- sign the PUF chip public key certificate using the hardcoded key; and
- send, to the entity, as a request response, a signed PUF chip public key certificate.

14. System according to claim 13, wherein the entity includes a server.

15. A chip for managing a Physically Unclonable Function, PUF, chip public key, the chip including at least one PUF type element and at least one hardcoded key, the chip is configured to:
- receive, from an entity, a request for getting a signed PUF chip public key certificate;
- generate, as a PUF chip private key, based on the request, a private key relating to the at least one PUF element, and determine, as a PUF chip public key, a public key relating to the at least one PUF element;
- generate, as a PUF chip public key certificate, a certificate relating to the PUF chip public key; and
- sign the PUF chip public key certificate using the hardcoded key.
